# EUROPÄISCHE PATENTSCHRIFT

(11) **EP 2 745 205 B1**
(45) Veröffentlichungstag und Bekanntmachung des Hinweises auf die Patenterteilung: **03.08.2016**
(21) Anmeldenummer: 12784216.9
(22) Anmeldetag: 05.10.2012
(51) Int. Cl.: G06F 11/20, G06F 11/14

(54) **VERFAHREN ZUM BETREIBEN EINES STEUERUNGSNETZWERK UND STEUERUNGSNETZWERK**
METHOD FOR OPERATING A CONTROL NETWORK, AND CONTROL NETWORK
PROCÉDÉ PERMETTANT DE FAIRE FONCTIONNER UN RÉSEAU DE COMMANDE ET RÉSEAU DE COMMANDE

(30) Priorität: 13.10.2011 US 201113272260
(43) Veröffentlichungstag der Anmeldung: 25.06.2014
(73) Patentinhaber: Siemens Aktiengesellschaft, 80333 München (DE)
(72) Erfinder: KIRSCH, Andreas, 91334 Hemhofen (DE); LUDWIG, Hartmut, West Windsor, NJ 08550 (US); PORSCH, Roland, 95469 Speichersdorf (DE); SCHWARZ, Tino, 91056 Erlangen (DE); ZIEGLER, Andreas, 90592 Schwarzenbruck (DE)
(86) Internationale Anmeldenummer: PCT/EP2012/069688
(87) Internationale Veröffentlichungsnummer: WO 2013/053643

(56) Entgegenhaltungen:
- EP-A2- 1 024 428
- KR-A- 20040 075 174
- US-B2- 6 782 416

## Beschreibung

Es ist bekannt, technische Einrichtungen redundant auszuführen, wenn eine hohe Verfügbarkeit erforderlich ist. Dies gilt auch für Schienenfahrzeuge, die redundant insofern ausgeführt sind, als sie neben einem ersten Steuerungsrechner einen zweiten Steuerungsrechner aufweisen. Von den Steuerungsrechnern sind verschiedene Geräte des Schienenfahrzeugs über ein schienenfahrzeugeigenes Datenleitungsnetz ansteuerbar; bei diesen Geräten kann es sich um funktionswichtige Geräte oder um für die Funktionstüchtigkeit des Schienenfahrzeugs nicht unbedingt erforderliche Geräte handeln.

Um zu vermeiden, dass in einem solchen Steuerungsnetzwerk mehr als ein Rechner die Funktion eines Masters ausübt, ist es bekannt, die Steuerrechner über mehr als eine physikalische Verbindung (redundante Verbindung) miteinander zu koppeln. Mittels dieser redundanten Verbindung kann erkannt werden, ob der zweite, als Standby-Rechner wirkende Steuerrechner ausgefallen ist, oder ob eine Störung der Kommunikation vorliegt. Aus der US6782416 ist ein Verfahren ohne redundante Verbindung bekannt, das auf dem Anbinden einer einzelnen "Quorum Disk" beruht.

Der Erfindung, welche durch die unabhängigen Ansprüche 1 and 5 definiert ist, liegt die Aufgabe zugrunde, ein Verfahren zum Betreiben eines Steuerungsnetzwerkes mit aus Redundanzgründen zwei Steuerungsrechnern vorzuschlagen, das sich mit vergleichsweise geringem Aufwand sicher durchführen lässt. Zur Lösung dieser Aufgabe ist erfindungsgemäß ein Verfahren zum Betreiben eines Steuerungsnetzwerkes mit
mit einer einzigen physikalischen Verbindung zwischen einem ersten Steuerungsrechner und einem zweiten redundanten Steuerungsrechner über ein Datenleitungsnetz geeignet, an das mehrere funktionswichtige, datenverarbeitungstechnische Geräte angeschlossen sind; die datentechnische Verbindung zwischen den Steuerungsrechnern und den funktionswichtigen Geräten ist mittels eines Heartbeats gegeben, wobei zur Aufnahme des Betriebs des Steuerungsnetzwerks die Kommunikationsverbindung zwischen den beiden Steuerungsrechnern überprüft wird; bei positivem Prüfungsergebnis wird einem Steuerungsrechner eine Master-Funktion zugewiesen, bei negativem Prüfungsergebnis binden beide Steuerungsrechner nach einer festgelegten Reihenfolge die funktionswichtigen Geräte an sich an; bei einer Anbindung einer vorgegebenem Anzahl der funktionswichtigen Geräte an einen der beiden Steuerungsrechner übernimmt dieser die Master-Funktion und der andere Steuerungsrechner die Standby-Funkti on; bei einer unterhalb der vorgegebenen Anzahl liegenden Zahl von an jeden der beiden Steuerungsrechner angebundenen funktionswichtigen Geräten wird ein Signal erzeugt, das einen gestörten Zustand des Steuerungsnetzwerkes signalisiert.

Ein Vorteil des erfindungsgemäßen Verfahrens besteht darin, dass auf eine zweite bzw. redundante Verbindung zwischen den beiden Steuerungsrechnern verzichtet werden kann, weil die direkte Kommunikation zwischen den beiden Steuerungsrechnern und die Einbindung von datenverarbeitungstechnischen Geräten an das Steuerungsnetzwerk einen redundanten und diversitären Hearbeat implementieren. Ein derartiger Hearbeat ist beispielsweise in der Internet-Veröffentlichung http://de.wikipedia.org/wiki/Heartbeat kurz beschrieben. Dabei wird darüber hinaus vorteilhafterweise mit Sicherheit vermieden, dass beiden Steuerungsrechnern gleichzeitig eine Master-Funktion zugeordnet werden kann. Dies ist sicherheitstechnisch notwendig.

Bei einer vorteilhaften Ausführungsform des erfindungsgemäßen Verfahrens behält bei einem Betrieb mit dem ersten Steuerungsrechner mit Master-Funktion und dem zweiten Steuerungsrechner im Standby-Betrieb bei von ihnen gegenseitig festgestelltem Kommunikationsausfall der erste Steuerungsrechner seine Funktion bei, solange er die vorgegebene Anzahl von funktionswichtigen Geräte erreicht und gleichzeitig der zweite Steuerungsrechner prüft, ob die funktionswichtigen Geräte eingeschaltet und nicht durch den ersten Steuerungsrechner belegt sind; bei nicht durch den ersten Steuerungsrechner belegten funktionswichtigen Geräten belegt der zweite Steuerungsrechner diese Geräte seinerseits und übernimmt bei Erreichen der vorgegebenen Anzahl dieser Geräte die Master-Funktion oder behält bei Nichterreichen die Standby-Funktion unter Signalisierung eines gestörten Zustands des Steuerungsnetzwerkes bei.

Diese Ausgestaltung des erfindungsgemäßen Verfahrens hat den besonderen Vorteil, dass die beiden Steuerungsrechner nicht gleichzeitig die Master-Funktion ausüben können, obwohl sie in einem Störungsfalle nicht mehr miteinander kommunizieren können. Auch in dem besonders kritischen Fall, dass eine Kommunikationsstörung durch eine Unterbrechung des Datenleitungsnetzes eingetreten ist, können nicht beide Steuerungsrechner gleichzeitig mit jeweils einem Teil der funktionswichtigen, datenverarbeitungstechnischen Geräten jeweils eine Master-Funktion ausüben. Damit ist die Funktionstüchtigkeit und insbesondere die Funktionssicherheit des erfindungsgemäßen Verfahrens vergleichsweise hoch.

Bei dem erfindungsgemäßen Verfahren kann die vorgegebene Anzahl der zur Aufrechterhaltung der Master-Funktion vorgesehen funktionswichtigen, datenverarbeitungstechnischen Geräte unterschiedlich hoch festgelegt werden. Zur Erzielung einer hohen Funktionssicherheit erscheint es vorteilhaft, wenn als vorgegebene Anzahl von funktionswichtigen Geräten die Hälfte der Geräte bestimmt wird.

Als vorteilhaft wird es angesehen, wenn jeder Steuerungsrechner hinsichtlich der funktionswichtigen Geräte als Semaphor arbeitet, weil es nicht auf die angebundenen einzelnen funktionswichtigen Geräte, sondern jeweils nur auf Einhaltung der vorgegebenen Anzahl für die Master-Funktion ankommt. Zu einem Semaphor finden sich kurze einführende Darlegungen in der Internet-Veröffentlichung http://en.wikipedia.org/wiki/Semaphore_(programming).

Die Erfindung betrifft ferner ein Steuerungsnetzwerk mit aus Redundanzgründen zwei Steuerungsrechnern und stellt sich die Aufgabe, einem solchen Steuerungsnetzwerk mit relativ geringen Kosten eine vergleichsweise hohe Sicherheitsfunktion zu verleihen.

Zur Lösung dieser Aufgabe ist erfindungsgemäß bei einem Steuerungsnetzwerk mit einer einzigen physikalischen Verbindung zwischen einem ersten Steuerungsrechner und einem zweiten redundanten Steuerungsrechner über ein Datenleitungsnetz, an das mehrere funktionswichtige, datenverarbeitungstechnische Geräte angeschlossen sind, die datentechnische Verbindung zwischen den Steuerungsrechnern und den funktionswichtigen Geräten mittels eines redundanten und diversitären Heartbeats gegeben. Zur Ausgestaltung des Heartbeats wird hier nur auf die oben angegebenen Literaturstellen verwiesen.

Als vorteilhaft wird es erachtet, wenn jeder Steuerungsrechner so ausgebildet ist, dass er hinsichtlich der funktionswichtigen Geräte als Semaphor arbeitet.

Vorteilhaft ist es ferner, wenn die funktionswichtigen Geräte so ausgebildet sind, dass sie in ihrem Ausgangssignal ein "Funktionwichtig"-Kennzeichen abgeben.

Mit besonderem Vorteil lässt das erfindungsgemäße Steuerungsnetzwerk bei schienengebundenen Fahrzeugen einsetzen, indem der erste Steuerungsrechner in einem ersten über eine Kupplung mit einem zweiten Abschnitt eines Schienenfahrzeugs verbundenen Abschnitt des Schienenfahrzeugs untergebracht ist und die einzige physikalische Verbindung über die Kupplung verläuft. Dadurch lässt sich der Verkabelungsaufwand wesentlich reduzieren und die Kupplung relativ einfach gestalten.

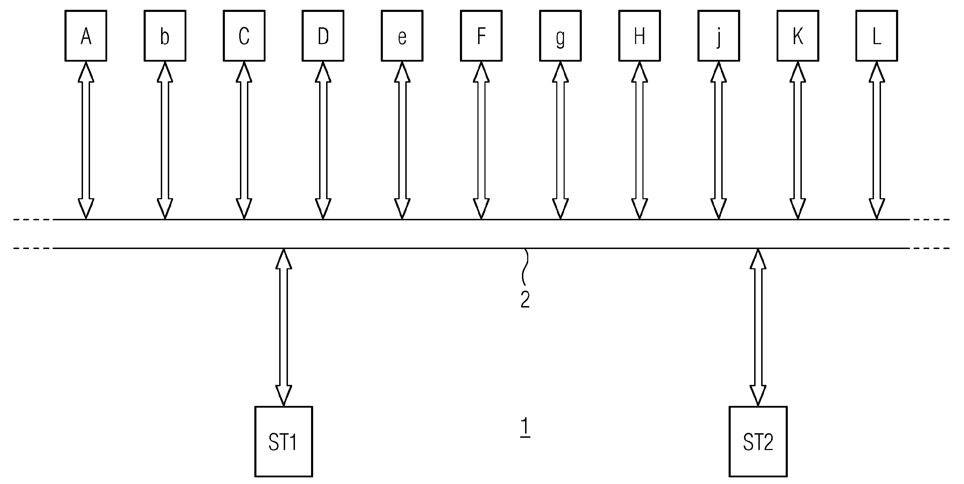

Zur weiteren Erläuterung der Erfindung ist in der Figur ein Ausführungsbeispiel des erfindungsgemäßen Steuerungsnetzwerkes dargestellt.

Das in der Figur dargestellte Steuerungsnetzwerk 1 beispielsweise eines Schienenfahrzeugs weist ein Datenleitungsnetz mit einem Datenbus 2 auf. An den Datenbus 2 sind ein erster Steuerungsrechner ST1 und ein zweiter redundanter Steuerungsrechner ST2 angeschlossen, zwischen denen eine Heartbeat-Netzwerkverbindung eingerichtet ist. Außerdem sind mit dem Datenbus 2 funktionswichtige, datenverarbeitungstechnische Geräte A,C,D,F,H,K und L verbunden, die über eine Punkt-zu-Punkt-Verbindung mit den Steuerungsrechnern ST1 Und ST2 unter Verwendung eines Semaphors in Verbindung treten können; dabei kann es sich um funktionswichtige Geräte A,C,D,F,H,K und L eines Steuerungsnetzwerkes für ein Schienenfahrzeug handeln. Ferner sind mit dem Datenbus 2 weitere datenverarbeitungstechnische Geräte b,e,g und j verbunden, die für die Funktion beispielsweise eines Schienenfahrzeugs nicht notwendig sind.

Der Betrieb des gezeigten Steuerungsnetzwerks 1 wird in der Weise aufgenommen, dass beide Steuerungsrechner ST1 und ST2 gestartet werden. Kann eine Kommunikation zwischen den beiden Steuerungsrechners St1 und ST2 aufgebaut werden, dann wird einem der beiden Steuerungsrechner eine Master-Funktion zugewiesen.

Kommt der Kommunikationsaufbau nicht zustande, dann versuchen die beiden Steuerungsrechner ST1 und ST2 gemäß einer vorliegenden Liste in einer festgelegten Reihenfolge die funktionswichtigen, datenverarbeitungstechnischen Geräte A,C,D,F,H,K und L an sich zu binden. Stellt dabei beispielsweise der erste Steuerungsrechner ST1 fest, dass funktionswichtige Geräte unter den Geräten A,C,D,F,H,K und L nicht ausgeschaltet und auch nicht von dem zweiten Steuerungsrechner ST2 belegt sind, bindet er diese Geräte an sich; stellt er dabei fest, dass er mindestens eine vorgegebene Anzahl von funktionswichtigen Geräten A,C,D,F,H,K und L, beispielsweise vier Geräte A,C,D und F, an sich gebunden hat, dann übernimmt er selbsttätig die Master-Funktion. Die vorgegebenen Anzahl sollte stets mehr als die Hälfte aller funktionswichtigen Geräte A,C,D,F,H,K und L umfassen. Der zweite Steuerungsrechner ST2 geht in den Standby-Betrieb.

Kommt der oben erwähnte Kommunikationsaufbau nach dem Start der beiden Steuerungsrechner ST1 und ST2 nicht zustande und stellt der erste Steuerungsrechner ST1 - anders als gerade beschrieben - fest, dass er nicht die vorgegebene Anzahl von funktionswichtigen Geräten an sich binden kann, dann zieht er sich zurück (Standby-Funktion), und der zweite Steuerungsrechner ST2 übernimmt die Master-Funktion unter der Voraussetzung, dass er die vorgegebene Anzahl von funktionswichtigen Geräten an sich binden konnte. Ist diese Voraussetzung nicht gegeben, dann geht auch der zweite Steuerungsrechner ST2 in den Standby-Zustand.

Aus der Situation mit beiden Steuerungsrechnern ST1 und ST2 im Standby-Betrieb lässt sich ein Signal ableiten, dass einen gestörten Zustand des Steuerungsnetzwerkes 1 kennzeichnet. Dies entspricht auch dem tatsächlichen Zustand des Steuerungsnetzwerkes 1, weil dieser Zustand dadurch hervor gerufen ist, dass für die beiden Steuerungsrechner ST1 und ST2 nicht ausreichend viele funktionswichtige Geräte A,C,D,F,H,K und L zur Anbindung zur Verfügung standen. Dieses Signal wird daher auch sicherheitstechnischen Gesichtspunkten gerecht.

Kommt es nach gelungener Aufnahme des Betriebs des Steuerungsnetzwerkes 1 und mit beispielsweise dem ersten Steuerungsrechner ST1 in Master-Funktion und dem zweiten Steuerungsrechner ST2 in Standby-Funktion zu einem Kommunikationsausfall zwischen den beiden Steuerungsrechnern ST1 und ST2, behält der erste Steuerungsrechner ST1 seine Master-Funktion bei, sofern er nach wie vor mindestens die vorgegebene Anzahl von funktionswichtigen Geräten erreichen kann. Es prüft jedoch der zweite Steuerungsrechner ST2, ob die funktionswichtigen Geräte A,C,D,F,H,K und L eingeschaltet und nicht durch den ersten Steuerungsrechner ST1 belegt sind. Ergibt sich bei dieser Prüfung, dass die funktionswichtigen Geräte A,C,D,F,H,K und L durch den ersten Steuerungsrechner ST1 nicht belegt sind - der erste Steuerungsrechner ST1 ist beispielsweise ausgefallen -, dann bindet der bisher im Standby-Betrieb befindliche zweite Steuerungsrechner ST2 die funktionswichtigen Geräte A,C,D,F,H,K und L an sich; gelingt dies in der vorgegebenen Anzahl, dann übernimmt der zweite Steuerungsrechner ST2 die Master-Funktion. Andernfalls verharrt der zweite Steuerungsrechner ST2 im Standby-Betrieb und übernimmt nicht die Master-Funktion. Dies signalisiert eine starke Einschränkung in der Verfügbarkeit des Steuerungsnetzwerkes 1 und ist aus sicherheitstechnischen Gesichtspunkten in Ordnung.

## Patentansprüche

1. Verfahren zum Betreiben eines Steuerungsnetzwerks (1) mit einer einzigen physikalischen Verbindung zwischen einem ersten Steuerungsrechner (ST1) und einem zweiten redundanten Steuerungsrechner (ST2) über ein Datenleitungsnetz (2), an das mehrere funktionswichtige, datenverarbeitungstechnische Geräte (A, C, D, F, H, K, L) angeschlossen sind, wobei die datentechnische Verbindung zwischen den Steuerungsrechnern (ST1, ST2) und den funktionswichtigen Geräten (A, C, D, F, H, K, L) mittels eines Heartbeats gegeben ist, wobei
zur Aufnahme des Betriebs des Steuerungsnetzwerks (1) die Kommunikationsverbindung zwischen den beiden Steuerungsrechnern (ST1, ST2) überprüft wird und
• bei positivem Prüfungsergebnis einem Steuerungsrechner (ST1) eine Master-Funktion zugewiesen wird,
• bei negativem Prüfungsergebnis beide Steuerungsrechner (ST1, ST2) nach einer festgelegten Reihenfolge die funktionswichtigen Geräte (A, C, D, F, H, K, L) an sich binden, und
• bei einer Anbindung einer vorgegebenen Anzahl der funktionswichtigen Geräte (A, C, D, F, H, K, L) an einen der beiden Steuerungsrechner (ST1) dieser die Master-Funktion und der andere Steuerungsrechner (ST2) die Standby-Funktion übernimmt,
• bei einer unterhalb der vorgegebenen Anzahl liegenden Zahl von an jeden der beiden Steuerungsrechner (ST1, ST2) angebundenen funktionswichtigen Geräten (A, C, D, F, H, K, L) ein Signal erzeugt wird, das einen gestörten Zustand des Steuerungsnetzwerkes (1) signalisiert.

2. Verfahren nach Anspruch 1,
**dadurch gekennzeichnet, dass**
bei einem Betrieb mit dem ersten Steuerungsrechner (ST1) als Master-Funktion und dem zweiten Steuerungsrechner (ST2) in Standby-Betrieb bei von ihnen gegenseitig festgestelltem Kommunikationsausfall
• der erste Steuerungsrechner (ST1) seine Funktion beibehält, solange er die vorgegebene Anzahl von funktionswichtigen Geräte (A, C, D, F, H, K, L) erreicht und gleichzeitig der zweite Steuerungsrechner (ST2) prüft, ob die funktionswichtigen Geräte (A, C, D, F, H, K, L) eingeschaltet und nicht durch den ersten Steuerungsrechner (ST1) belegt sind,
• bei nicht durch den ersten Steuerungsrechner (ST1) belegten funktionswichtigen Geräten (A, C, D, F, H, K, L) der zweite Steuerungsrechner (ST2) diese Geräte (A, C, D, F, H, K, L) einerseits belegt und bei Erreichen der vorgegebenen Anzahl dieser Geräte (A, C, D, F, H, K, L) die Master-Funktion übernimmt oder bei Nichterreichen die Standby-Funktion unter Signalisierung eines gestörten Zustands des Steuerungsnetzwerkes (1) beibehält.

3. Verfahren nach Anspruch 1,
**dadurch gekennzeichnet, dass**
als vorgegebene Anzahl von funktionswichtigen Geräten (A, C, D, F, H, K, L) die Hälfte der Geräte bestimmt wird.

4. Verfahren nach einem der vorangehenden Ansprüche,
**dadurch gekennzeichnet, dass**
jeder Steuerungsrechner (ST1, ST2) hinsichtlich der funktionswichtigen Geräte als Semaphor arbeitet.

5. Steuerungsnetzwerk (1) mit einem ersten Steuerungsrechner (ST1), einem zweiten Steuerungsrechner (ST2) und einer einzigen physikalischen Verbindung zwischen dem ersten Steuerungsrechner (ST1) und dem zweiten redundanten Steuerungsrechner (ST2) über ein Datenleitungsnetz (2), an das mehrere funktionswichtige, datenverarbeitungstechnische Geräte (A, C, D, F, H, K, L) angeschlossen sind, wobei die datentechnische Verbindung zwischen den Steuerungsrechnern (ST1, ST2) und den funktionswichtigen Geräten (A, C, D, F, H, K, L) mittels eines Heartbeats gegeben ist,
wobei bei positivem Prüfungsergebnis einer zur Aufnahme des Betriebs des Steuerungsnetzwerks (1) stattfindenden Überprüfung der Kommunikationsverbindung zwischen den beiden Steuerungsrechnern (ST1, ST2) eine Master-Funktion einem Steuerungsrechner (ST1) zuweisbar ist;
wobei die Steuerungsrechner (ST1, ST2) jeweils dazu vorgesehen sind,
- bei negativem Prüfungsergebnis der Überprüfung nach einer festgelegten Reihenfolge die funktionswichtigen Geräte (A, C, D, F, H, K, L) an sich zu binden, und
- bei einer Anbindung einer vorgegebenen Anzahl der funktionswichtigen Geräte (A, C, D, F, H, K, L) an sich als erster Steuerungsrechner die Master-Funktion zu übernehmen, und
- bei einer Übernahme der Master-Funktion durch den ersten Steuerungsrechner (ST1) als zweiter Steuerungsrechner (ST2) die Standby-Funktion zu übernehmen;
und wobei eine Einheit vorgesehen ist, die dazu dient, bei einer unterhalb der vorgegebenen Anzahl liegenden Zahl von an jeden der beiden Steuerungsrechner (ST1, ST2) angebundenen funktionswichtigen Geräten (A, C, D, F, H, K, L) ein Signal zu erzeugen, das einen gestörten Zustand des Steuerungsnetzwerkes (1) signalisiert.

6. Steuerungsnetzwerk nach Anspruch 5,
**dadurch gekennzeichnet, dass**
jeder Steuerungsrechner (ST1, ST2) so ausgebildet ist, dass er hinsichtlich der funktionswichtigen Geräte (A, C, D, F, H, K, L) als Semaphor arbeitet.

7. Steuerungsnetzwerk nach Anspruch 5 oder 6,
**dadurch gekennzeichnet, dass**
die funktionswichtigen Geräte (A, C, D, F, H, K, L) so ausgebildet sind, dass sie in ihrem Ausgangssignal ein "Funktionwichtig"-Kennzeichen abgeben.

8. Steuerungsnetzwerk nach einem der Ansprüche 5 bis 7,
**dadurch gekennzeichnet, dass**
der erste Steuerungsrechner (ST1) in einem ersten über eine Kupplung mit einem zweiten Abschnitt eines Schienenfahrzeugs verbundenen Abschnitt des Schienenfahrzeugs untergebracht ist und die einzige physikalische Verbindung über die Kupplung verläuft.

## Claims

1. Method for operating a control network (1) having a single physical connection between a first control computer (ST1) and a second, redundant control computer (ST2) via a data line network (2) to which a plurality of functionally important data processing devices (A, C, D, F, H, K, L) are connected, wherein the data connection between the control computers (ST1, ST2) and the functionally important devices (A, C, D, F, H, K, L) is provided using a heartbeat, wherein,
in order to start operation of the control network (1), the communication connection between the two control computers (ST1, ST2) is checked, and
• if the result of the check is positive, a master function is allocated to one control computer (ST1),
• if the result of the check is negative, both control computers (ST1, ST2) connect the functionally important devices (A, C, D, F, H, K, L) to themselves according to a defined sequence, and
• if a predefined quantity of the functionally important devices (A, C, D, F, H, K, L) is connected to one of the two control computers (ST1), this control computer assumes the master function and the other control computer (ST2) assumes the standby function,
• if a number of functionally important devices (A, C, D, F, H, K, L) connected to each of the two control computers (ST1, ST2) is below the predefined quantity, a signal which signals a faulty state of the control network (1) is generated.

2. Method according to Claim 1,
**characterized in that**
during operation with the first control computer (ST1) as the master function and with the second control computer (ST2) in standby operation, in the event of communication failure mutually determined by said control computers,
• the first control computer (ST1) retains its function as long as it reaches the predefined quantity of functionally important devices (A, C, D, F, H, K, L) and the second control computer (ST2) simultaneously checks whether the functionally important devices (A, C, D, F, H, K, L) are switched on and are not used by the first control computer (ST1),
• if the functionally important devices (A, C, D, F, H, K, L) are not used by the first control computer (ST1), the second control computer (ST2) uses these devices (A, C, D, F, H, K, L) for its part and assumes the master function if the predefined quantity of these devices (A, C, D, F, H, K, L) is reached or, if said quantity is not reached, retains the standby function and signals a faulty state of the control network (1).

3. Method according to Claim 1,
**characterized in that**
half of the devices is determined as the predefined quantity of functionally important devices (A, C, D, F, H, K, L).

4. Method according to one of the preceding claims,
**characterized in that**
each control computer (ST1, ST2) operates as a semaphore with respect to the functionally important devices.

5. Control network (1) having a first control computer (ST1), a second control computer (ST2) and a single physical connection between the first control computer (ST1) and the second, redundant control computer (ST2) via a data line network (2) to which a plurality of functionally important data processing devices (A, C, D, F, H, K, L) are connected,
the data connection between the control computers (ST1, ST2) and the functionally important devices (A, C, D, F, H, K, L) being provided using a heartbeat,
wherein, in the event of a positive result of a check of the communication connection between the two control computers (ST1, ST2), which takes place in order to start operation of the control network (1), a master function can be allocated to one control computer (ST1);
wherein the control computers (ST1, ST2) are each provided for the purpose of
- connecting the functionally important devices (A, C, D, F, H, K, L) to themselves according to a defined sequence if the result of the check is negative, and
- assuming the master function as the first control computer if a predefined number of the functionally important devices (A, C, D, F, H, K, L) is connected to it, and
- assuming the standby function as the second control computer (ST2) if the master function is assumed by the first control computer (ST1);
and wherein provision is made of a unit which is used to generate a signal signalling a faulty state of the control network (1) if a number of functionally important devices (A, C, D, F, H, K, L) connected to each of the two control computers (ST1, ST2) is below the predefined number.

6. Control network according to Claim 5,
**characterized in that**
each control computer (ST1, ST2) is designed in such a manner that it operates as a semaphore with respect to the functionally important devices (A, C, D, F, H, K, L).

7. Control network according to Claim 5 or 6,
**characterized in that**
the functionally important devices (A, C, D, F, H, K, L) are designed in such a manner that they emit a "functionally important" indicator in their output signal.

8. Control network according to one of Claims 5 to 7,
**characterized in that**
the first control computer (ST1) is accommodated in a first section of a rail vehicle connected to a second section of the rail vehicle via a coupling, and the single physical connection runs via the coupling.

## Revendications

1. Procédé pour faire fonctionner un réseau ( 1 ) de commande ayant une liaison physique unique entre un premier ordinateur ( ST1 ) de commande et un deuxième ordinateur ( ST2 ) de commande redondant par l'intermédiaire d'un réseau ( 2 ) de lignes de données, auquel sont raccordés plusieurs appareils ( A, C, D, F, H, K, L ) de technique de traitement de données à fonction importante, la liaison en technique de donnée entre les ordinateurs ( ST1, ST2 ) de commande et les appareils ( A, C, D, F, H, K, L ) à fonction importante étant donnés au moyen d'un heartbeat, dans lequel
pour l'enregistrement du fonctionnement du réseau ( 1 ) de commande, on contrôle la liaison de communication entre les deux ordinateurs ( ST1, ST2 ) de commande et
• si le résultat du contrôle est positif, on affecte une fonction maître à un ordinateur ( ST1 ) de commande,
• si le résultat du contrôle est négatif, les deux ordinateurs ( ST1, ST2 ) de commande relient en soi suivant un ordre fixé les appareils ( A, C, D, F, H, K, L ) à fonction importante et
• pour une liaison d'un nombre donné à l'avance des appareils ( A, C, D, F, H, K, L ) à fonction importante à l'un des deux ordinateurs ( ST1 ) de commande, celui-ci prend en charge la fonction maître et l'autre ordinateur ( ST2 ) de commande la fonction de secours,
• pour un nombre inférieur au nombre donné à l'avance d'appareils ( A, C, D, F, H, K, L ) à fonction importante reliés à chacun des deux ordinateurs ( ST1 ) de commande, on produit un signal qui signale un état perturbé du réseau ( 1 ) de commande.

2. Procédé suivant la revendication 1,
**caractérisé en ce que**
lors d'un fonctionnement avec le premier ordinateur ( ST1 ) de commande comme fonction maître et avec le deuxième ordinateur ( ST2 ) de commande en fonctionnement de secours, s'il y a une défaillance de communication constatée mutuellement par eux,
• le premier ordinateur ( ST1 ) de commande conserve sa fonction tant qu'il atteint le nombre donné à l'avance d'appareils ( A, C, D, F, H, K, L ) à fonction importante et, en même temps, le deuxième ordinateur ( ST2 ) de commande contrôle si les appareils ( A, C, D, F, H, K, L ) à fonction importante sont branchés et ne sont pas retenus par le premier ordinateur ( ST1 ) de commande,
• pour des appareils ( A, C, D, F, H, K, L ) à fonction importante qui ne sont pas retenus par le premier ordinateur ( ST1 ) de commande, le deuxième ordinateur ( ST2 ) de commande retient ces appareils ( A, C, D, F, H, K, L ) d'une part et, lorsque le nombre donné à l'avance de ces appareils ( A, C, D, F, H, K, L ) est atteint, prend en charge la fonction maître ou, s'il n'est pas atteint, conserve la fonction de secours en signalant un état perturbé du réseau ( 1 ) de commande.

3. Procédé suivant la revendication 1,
**caractérisé en ce que**
comme nombre donné à l'avance d'appareil ( A, C, D, F, H, K, L ) à fonction importante, on définit la moitié des appareils.

4. Procédé suivant l'une des revendications précédentes,
**caractérisé en ce que**
chaque ordinateur ( ST1, ST2 ) de commande fonctionne du point de vue des appareils à fonction importante comme un sémaphore.

5. Réseau ( 1 ) de commande ayant un premier ordinateur ( ST1 ) de commande, un deuxième ordinateur ( ST2 ) de commande et une liaison physique unique entre le premier ordinateur ( ST1 ) de commande et le deuxième ordinateur ( ST2 ) de commande redondant par un réseau ( 2 ) de lignes de données, auquel sont raccordés plusieurs appareils ( A, C, D, F, H, K, L ) en technique de traitement de données à fonction importante, la liaison en technique de données entre les ordinateurs ( ST1, ST2 ) de commande et les appareils ( A, C, D, F, H, K, L ) à fonction importante étant donnée au moyen d'un heartbeat, dans lequel
lors d'un résultat positif d'un contrôle, ayant lieu pour l'enregistrement du fonctionnement du réseau ( 1 ) de commande, de la liaison de communication entre les deux ordinateurs ( ST1, ST2 ) de commande, une fonction maître est affectée à un ordinateur ( ST1 ) de commande ;
les ordinateurs ( ST1, ST2 ) étant prévus respectivement pour
- si le résultat du contrôle est négatif, relier en soi suivant un ordre fixé les appareils ( A, C, D, F, H, K, L ) à fonction importante et
- lors d'une liaison d'un nombre donné à l'avance des appareils ( A, C, D, F, H, K, L ) à fonction importante, prendre en charge la fonction maître en soi comme premier ordinateur de commande et
- lors d'une prise en charge de la fonction maître, prendre en charge la fonction de secours par le premier ordinateur ( ST1 ) de commande comme deuxième ordinateur ( ST2 ) de commande et
- dans lequel il est prévu une unité qui sert à produire, lorsqu'un nombre inférieur au nombre donné à l'avance d'appareils ( A, C, D, F, H, K, L ) à fonction importante est relié à chacun des deux ordinateurs ( ST1, ST2 ) de commande, un signal, qui signale un état perturbé du réseau ( 1 ) de commande.

6. Réseau de commande suivant la revendication 5,
**caractérisé en ce que**
chaque ordinateur ( ST1, ST2 ) de commande est constitué de manière à fonctionner comme sémaphore du point de vue des appareils ( A, C, D, F, H, K, L ) à fonction importante.

7. Réseau de commande suivant la revendication 5 ou 6,
**caractérisé en ce que**
les appareils ( A, C, D, F, H, K, L ) à fonction importante sont constitués de manière à donner dans leur signal de sortie une caractéristique « à fonction importante ».

8. Réseau de commande suivant l'une des revendications 5 à 7,
**caractérisé en ce que**
le premier ordinateur ( ST1 ) de commande est logé dans une première partie d'un véhicule ferroviaire relié à une deuxième partie du véhicule ferroviaire par un attelage et la liaison physique unique passe par l'attelage.
